# EUROPÄISCHE PATENTANMELDUNG

(11) **EP 2 056 127 A2**
(43) Veröffentlichungstag der Anmeldung: **06.05.2009**
(21) Anmeldenummer: 08015371.1
(22) Anmeldetag: 30.08.2008
(51) Int. Cl.: G01T 1/00

(54) **Strahlungsmessgerät**

(30) Priorität: 02.11.2007 DE 102007052268
(71) Anmelder: PTW-Freiburg, 79115 Freiburg (DE)
(72) Erfinder: Pychlau, Christian, Dr., 79100 Freiburg (DE); Caccia, Massimo, 20129 Milano (IT); Martemiyanov, Alexander, 117449 Moscow (RU); Kucewicz, Wojiech, 31-413 Krakow (PL); Cappellini, Chiara, 22036 Erba (Como) (IT); Chmill, Valere, 22034 Brunate (Como) (IT)
(74) Vertreter: Maucher, Wolfgang

(57) **Zusammenfassung**

Die Erfindung bezieht sich auf ein Strahlungsmessgerät zur Bestimmung der Intensität und/oder der Dosis der ionisierenden Strahlung während einer radiologischen Untersuchung an einem Patienten, wobei das Strahlungsmessgerät (1) in dem Strahlengang zwischen Strahlungsquelle und Patient angeordnet ist. Die Erfindung ist dadurch gekennzeichnet, dass das Strahlungsmessgerät (1) wenigstens einen Szintillator (7) aufweist.

## Beschreibung

Die Erfindung bezieht sich auf ein Strahlungsmessgerät zur Bestimmung der Intensität und/oder der Dosis der ionisierenden Strahlung während einer radiologischen Untersuchung an einem Patienten, wobei das Strahlungsmessgerät in dem Strahlengang zwischen Strahlungsquelle und Patient angeordnet ist.

In der radiologischen Diagnostik werden zwei Arten von Untersuchungen unterschieden: die kurative Diagnostik zur gezielten Diagnose nach einem Anfangsverdacht und das sogenannte Screening, bei dem ohne Verdacht untersucht wird, um eine Erkrankung möglichst frühzeitig zu erkennen.

Bei beiden Arten der radiologischen Untersuchungen ist jedoch immer zu beachten, dass die verwendete ionisierende Strahlung das untersuchte Gewebe schädigt oder zerstört und es dadurch zu einer Erkrankung kommen kann. Es muss daher vor der Untersuchung genau abgeschätzt werden, ob ein möglicher Gewebe-Schaden durch die Bestrahlung zu Gunsten einer Diagnose zum Wohle des Patienten vertretbar ist. Insbesondere beim Screening muss daher das Risiko durch die Strahlenbelastung sehr genau abgeschätzt werden.

Die entscheidende Größe dabei ist die Dosis, die bei der Untersuchung im Gewebe absorbiert wird. Diese ist abhängig von der Strahlung, die von der Strahlungsquelle abgegeben wird, und dem untersuchten Gewebe selbst, da verschiedene Gewebetypen verschieden stark durch die Strahlung geschädigt werden.

Es ist also für die Planung oder Abschätzung einer Untersuchung wichtig, die genaue Dosis der Bestrahlung zu kennen, auch oder gerade weil sich die Dosen von mehreren zeitlich getrennten Untersuchungen summieren können, wenn sie in kurzen zeitlichen Abständen erfolgen.

Bislang werden Strahlungsquellen in regelmäßigen Intervallen kalibriert, wobei die Dosis mit einem Referenzmessgerät an einem Körper-Phantom bestimmt wird. Dadurch kann die Dosis einer Untersuchung mit dieser Strahlungsquelle jedoch lediglich abgeschätzt werden. Diese Dosis kann beispielsweise in einer Krankenakte oder auf dem Untersuchungsergebnis vermerkt werden. Somit ist jederzeit die bislang absorbierte Gesamtdosis bekannt und kann bei späteren Untersuchungen berücksichtigt werden.

Gerade bei einer radiologischen Untersuchung an empfindlichem Gewebe, wie etwa bei einer Mammografie, wäre es daher sinnvoll, die Strahlenbelastung direkt zu kennen, so dass die tatsächlich absorbierte Dosis bestimmt werden kann.

Dazu kann beispielsweise ein Thermolumineszenz-Dosimeter (TLD) zwischen Strahlungsquelle und Brust angeordnet werden. In dem TLD ist ein spezielles, zur Thermolumineszenz fähiges Material angeordnet, das die auftreffende Strahlung absorbiert. Wird das TLD nach der Bestrahlung gleichmäßig erwärmt, sendet es sichtbares Licht aus, dessen Intensität proportional zu der vorangehenden Bestrahlungs-Intensität ist. Die Auswertung der TLD ist dadurch aufwändig und das Messergebnis steht erst nach der Bestrahlung und Auswertung zur Verfügung. Es ist also nicht möglich, die Bestrahlungsintensität, ausgehend von der schon erreichten Dosis, während der laufenden Untersuchung anzupassen oder diese vorzeitig abzubrechen.

Eine Echtzeitdarstellung der Dosis ist beispielsweise bei der Verwendung von Halbleiter-Detektoren, die die ionisierende Strahlung direkt messen können, möglich. Diese Detektoren sind jedoch für die untersuchte Strahlung nur teilweise transparent, so dass ein dahinter befindliches Messobjekt abgeschattet wird und starke Bildartefakte entstehen. Eine Echtzeit-Messung am Patienten ist daher auch mit solchen Detektoren nicht möglich.

Es ist daher Aufgabe der Erfindung, ein Strahlungsmessgerät für ionisierende Strahlung zu schaffen, das eine Echtzeit-Bestimmung der Strahlungsintensität und/oder Dosis während einer radiologischen Untersuchung direkt am Patienten ermöglicht.

Diese Aufgabe wird erfindungsgemäß dadurch gelöst, dass das Strahlungsmessgerät wenigstens einen Szintillator aufweist.

Szintillatoren werden üblicherweise zur Bestimmung der Intensität von Gamma-Strahlen verwendet. Als Szintillatormaterialien eignen sich sowohl anorganische wie auch organische Substanzen. Ein anorganisches Szintillatormaterial ist beispielsweise Natriumiodid, das mit Thallium dotiert ist.

Organische Szintillatoren können beispielsweise Polyvinyltoluol, Polystyrol oder Polymethylmethacrylat enthalten. Diese Plastikszintillatoren müssen ebenfalls dotiert sein, damit eine Lichtaussendung möglich ist.

Im Szintillator werden durch einfallende, energiereiche Photonen freie geladene Teilchen erzeugt, die die Atome oder Moleküle des Szintillators in einen angeregten Zustand versetzen können. Da Beta-Strahlung selbst energiereiche, geladene Teilchen enthält, kann die Anregung der Atome oder Moleküle durch die Strahlung selbst erfolgen. Die angeregten Atome oder Moleküle fallen nach einer kurzen Zeit in ihren Grundzustand zurück und geben dabei ihre Energie als sichtbares Licht wieder ab.

Diese Fluoreszenz ist im Gegensatz zu den TLD spontan, das bedeutet, dass die Szintillator-Atome bereits nach einigen Nano- bis Mikrosekunden in ihren Grundzustand zurückfallen und die Lichtaussendung nahezu verzögerungsfrei stattfindet. Dadurch ist eine Messung in Echtzeit und während der Bestrahlung möglich.

Die abgestrahlte Lichtintensität ist dabei proportional zur Energie der einfallenden Strahlung. Es ist also möglich, durch die Messung des Fluoreszenz-Lichts die genaue Energie der einfallenden Teilchen zu bestimmen.

Durch fortlaufende Integration der Teilchen-Energien kann somit auch die aktuelle Dosis seit Beginn der Bestrahlung berechnet und angezeigt werden.

Der erfindungsgemäße Strahlungsmesser weist vorzugsweise einen Plastikszintillator auf, der auch für den Nachweis von Röntgenstrahlung geeignet ist. Dieser ist zweckmäßigerweise nur einige Zehntel-Millimeter dick und weist zudem eine geringe Absorption auf. Das bedeutet, dass durch die einfallende Strahlung nur wenige Moleküle angeregt werden. Dafür ist aber die Abschattung der dahinter liegenden Gewebeprobe nur gering und der Szintillator ist auf dem Untersuchungsergebnis, etwa einem Röntgenbild, praktisch unsichtbar.

Dadurch ist die Strahlungsmessung während der radiologischen Untersuchung direkt am Patienten möglich. Zusätzlich ist es denkbar, die Bestrahlung beim Erreichen einer bestimmten Dosis abzubrechen. Darüber hinaus kann in einer Krankenakte oder auf dem Untersuchungsergebnis, etwa dem Röntgenbild, die genaue verabreichte Dosis protokolliert werden. So wäre bei einer späteren Untersuchung die gesamte, bislang absorbierte Dosis genau bekannt und könnte bei der Risikoabschätzung als absoluter Wert mit berücksichtigt werden. Im Vergleich zu der üblichen Abschätzung anhand der Art und Anzahl der im laufenden Jahr bereits durchgeführten radiologischen Untersuchungen, würde dies einen enormen Gewinn an Sicherheit, sowohl für den Patienten als auch für den behandelnden Arzt, ergeben.

Der Szintillator kann rechteckig oder kreis- oder halbkreisförmig ausgebildet sein oder auch beliebig anders geformt sein, beispielsweise elliptisch. Vorzugsweise ist der Szintillator als Plättchen ausgebildet, das in einem Kunststoffelement, beispielsweise aus Plexiglas, eingebettet ist. Die Dicke des Szintillators kann dabei im Zehntel-Millimeter-Bereich liegen, vorzugsweise bei etwa 0,3 mm bis 0,5 mm. Zur Auswertung des abgestrahlten Fluoreszenz-Lichts kann der Szintillator von einem Lichtleiter umfasst sein, so dass das vom Szintillator ausgesandte Licht in den Lichtleiter einstrahlt und an einen Detektor weitergeleitet werden kann. Zweckmäßig ist es dabei, wenn der Lichtleiter das Plättchen einmal vollständig umkreist und wenn an wenigstens einem freien Ende des Lichtleiters ein Photo-Detektor zur Messung der Licht-Intensität angeordnet ist.

Eine andere vorteilhafte Ausführungsform gemäß der Erfindung sieht vor, dass der wenigstens eine Szintillator als szintillierender Lichtleiter ausgebildet ist. An diesen szintillierenden Lichtleiter kann an zumindest einem Leiterende ein üblicher Lichtleiter angeschlossen werden, der das Licht zu wenigstens einem Detektor transportiert. Dabei kann es vorteilhaft sein, wenn das Strahlungsmessgerät mehrere, vorzugsweise bis zu acht szintillierende Lichtleiter oder Lichtleitfasern hat.

Zweckmäßigerweise kann das zweite Ende des szintillierenden Lichtleiters mit einem zweiten Photo-Detektor verbunden werden, so dass eine größere Empfindlichkeit des Messaufbaus erreicht wird. Da der Plastikszintillator nur eine geringe Ausbeute besitzt, ist durch diese Anordnung eine genauere Messung der Fluoreszenz-Licht-Intensität möglich.

Es ist jedoch auch möglich, dass das Strahlungsmessgerät aus dem Szintillator mit dem umgreifenden Lichtleiter als eigenständige Funktionseinheit gebildet wird und frei über der Kompressionsplatte positioniert werden kann. Dadurch wird eine unnötige Abschattung des Gewebes verhindert, da kein zusätzliches Kunststoffelement in dem Strahlengang zwischen der Strahlungsquelle und dem Gewebe liegt.

Im Photo-Detektor können bekannte Halbleiter-Detektoren eingesetzt werden, die in der Lage sind, die Intensität des Fluoreszenz-Lichts zu bestimmen.

Die Photo-Detektoren können dabei separat in der Nähe des Patienten angeordnet sein oder in einem Anzeigegerät integriert sein, das die Dosis und/oder die aktuelle Strahlungsintensität anzeigt.

Bevorzugt kann der erfindungsgemäße Strahlungsmesser in der Mammografie eingesetzt werden, da hier das Risiko, durch die verwendete Röntgenstrahlung das Brustgewebe zu schädigen, besonders hoch ist und daher vor der Untersuchung sehr genau das Risiko abgeschätzt werden muss.

Bei der Mammografie wird das Brustgewebe üblicherweise durch eine Kompressionsplatte gehalten. Zweckmäßigerweise kann der Szintillator oberhalb oder unterhalb der Kompressionsplatte angeordnet werden. Da keine elektrische Verbindung zu dem Szintillator notwendig ist und der Kunststoff hautverträglich ist, ist ein Kontakt zum Gewebe unkritisch.

Eine weitere bevorzugte Ausführungsvariante sieht vor, dass der Szintillator in die Kompressionsplatte eingebettet ist, so dass die Handhabung des Messgeräts vereinfacht wird, da neben dem Platzieren der Kompressionsplatte keine zusätzlichen Handgriffe notwendig sind.

Nachfolgend wird die Erfindung anhand der Zeichnungen näher erläutert.

Es zeigen:
- Fig. 1: eine erste Anordnung eines erfindungsgemäßen Strahlungsmessgeräts,
- Fig. 2: eine zweite Anordnung des Strahlungsmessgeräts,
- Fig. 3: eine dritte Anordnung des Strahlungsmessgeräts,
- Fig. 4: eine Anordnungsmöglichkeit des Lichtleiters an dem Strahlungsmessgerät,
- Fig. 5: eine weitere Anordnungsmöglichkeit des Lichtleiters an dem Strahlungsmessgerät,
- Fig. 6: eine weitere Ausführungsvariante eines erfindungsgemäßen Strahlungsmessgeräts mit mehreren Szintillatoren und
- Fig. 7: eine schematische Ansicht eines Messaufbaus mit einem erfindungsgemäßen Strahlungsmessgeräts gemäß Fig.1.

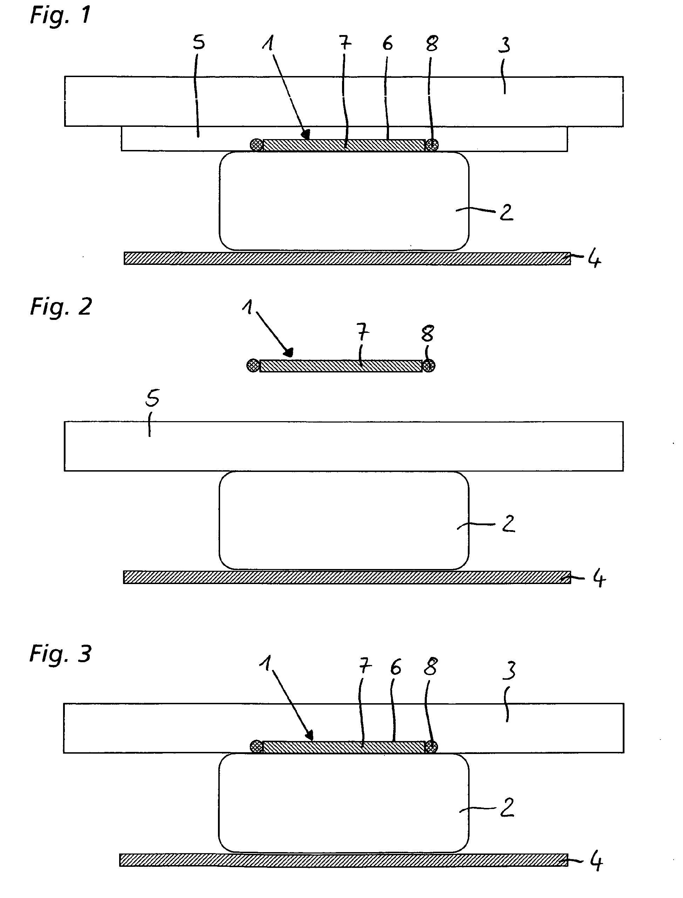

Figur 1 zeigt eine Anordnung eines im Ganzen mit 1 bezeichneten Strahlungsmessgeräts, insbesondere für den Einsatz während einer Mammografie.

Bei einer Mammografie wird das zu untersuchende Gewebe 2 durch eine Kompressionsplatte 3 auf einen Röntgenfilmhalter 4 gedrückt, um eine möglichst verwacklungsfreie Aufnahme zu erhalten. Erfindungsgemäß ist zwischen der Kompressionsplatte 3 und dem Gewebe 2 ein Strahlungsmessgerät 1 angeordnet, das im wesentlichen aus einer etwa 1 mm dicken, hier rechteckigen Kunststofffolie 5 besteht, die etwa mittig eine kreisförmige, etwa 3 cm große Ausnehmung 6 aufweist. In diese Ausnehmung ist ein etwa 0,5 mm dicker Szintillator 7 bündig eingebettet. Die Kunststofffolie 5 und der Szintillator 7 sind aus röntgen-durchlässigem Kunststoff hergestellt, so dass keine übermäßige Abschattung des Röntgenbildes entsteht.

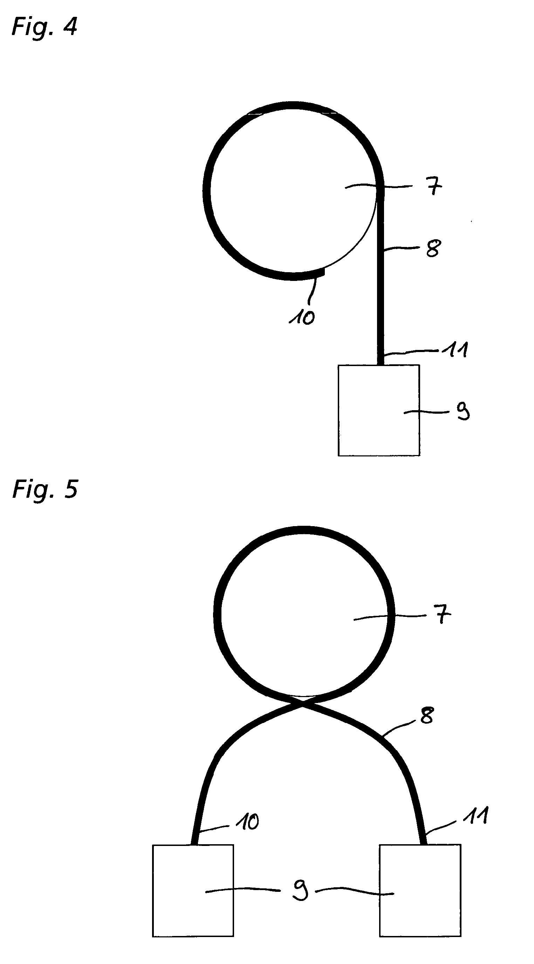

Der Szintillator 7 ist von einem Lichtleiter 8 umfasst, der mit in der Kunststofffolie 5 eingebettet ist und das vom Szintillator 7 ausgehende Fluoreszenz-Licht einfängt und an einen Detektor 9 weiterleitet. Wie in Fig. 4 schematisch dargestellt, ist der Lichtleiter 8 im wesentlichen einmal um den Szintillator 7 gewickelt. Ein Ende 10 des Lichtleiters 8 liegt dabei an dem Szintillator 7 an, während das freie Ende 11 etwa tangential vom Szintillator 7 wegführt und mit einem Photo-Detektor 9 verbunden ist, der die Intensität des Fluoreszenz-Lichts ermittelt.

Eine alternative Ausführung ist in Fig.5 gezeigt, bei der der Lichtleiter 8 im wesentlichen einmal ganz um den Szintillator 7 gewickelt ist und die beiden Leiterenden 10, 11 vom Szintillator 7 wegführen. Beide Enden 10, 11 sind jeweils mit einem Photo-Detektor 9 verbunden, um eine bessere Ausbeute und/oder Analyse des Fluoreszenz-Lichts des Szintillators 7 zu erzielen.

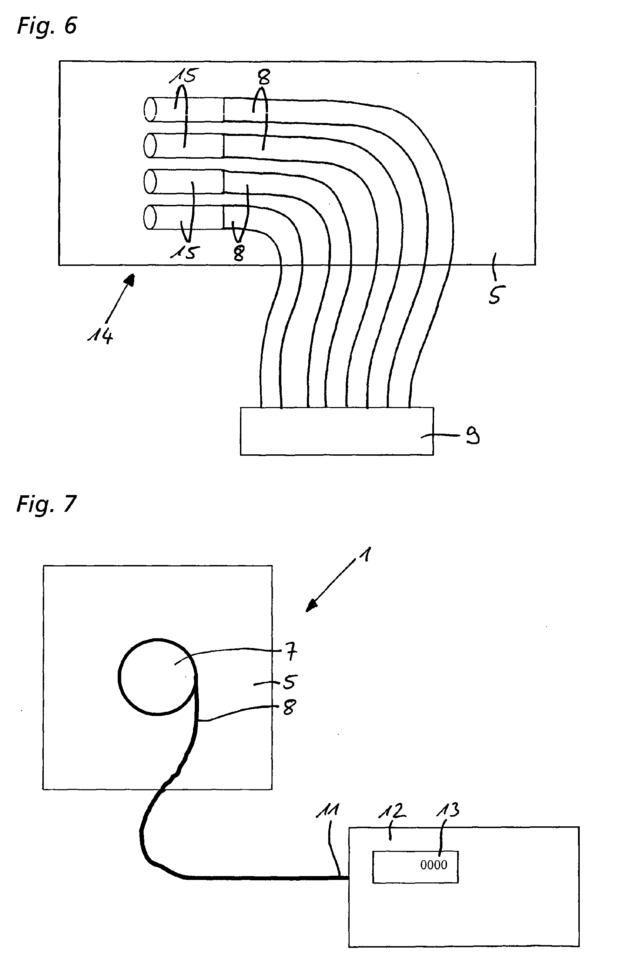

Die Platzierung des Photo-Detektors 9 ist dabei unkritisch. Es ist möglich den Photo-Detektor 9 nahe am Patienten anzuordnen und elektrisch mit einem Anzeigegerät 12 zu verbinden, oder wie in Fig.7 gezeigt, den Photo-Detektor in dem Anzeigegerät 12 zu integrieren, so dass die Signalübertragung ausschließlich in dem Lichtleiter 8 erfolgt. An dem Anzeigegerät 12 ist eine Anzeige 13 angeordnet, auf der in Echtzeit die Dosis und/oder die Intensität der Röntgen-Strahlung abgelesen werden kann.

Da weder am Szintillator 7 noch an der Kunststofffolie 5 elektrische Kontakte bestehen, kann das Messgerät 1 ohne Bedenken direkt auf der Haut des Patienten platziert werden.

Die in Fig.2 gezeigte Anordnung des erfindungsgemäßen Strahlungsmessgeräts unterscheidet sich von der Fig.1 dadurch, dass das Strahlungsmessgerät 1 nur durch den Szintillator 7 und den umgreifenden Lichtleiter 8 gebildet ist. Das Strahlungsmessgerät 1 ist frei oberhalb der Kompressionsplatte 3 angeordnet, wobei ein Kontakt möglich, aber nicht notwendig ist. Diese Anordnung kann vom Patienten als angenehmer empfunden werden, da der Szintillator 7 nicht auf der Haut aufliegt. Weiterhin entsteht keine unnötige Abschattung durch eine zusätzliche Kunststofffolie 5.

In der Ausführung der Fig.3 ist, abweichend von der Fig.1, das Strahlungsmessgerät 1 direkt in die Kompressionsplatte 3 integriert, so dass ebenfalls keine separate Kunststofffolie 5 notwendig ist. Diese Ausführung erleichtert die Anwendung des erfindungsgemäßen Messgeräts 1, da keine zusätzliche Folie 5 auf dem Gewebe 2 platziert werden muss.

Das in der Fig.6 gezeigte Strahlungsmessgerät 14 weist vier Szintillatoren 15 auf, die im wesentlichen zylinderförmig ausgeführt sind. Jeweils an einem axialen Ende der Szintillatoren 15 sind Lichtleiter 8 zum Auffangen des Fluoreszenz-Lichts und Weiterleiten an einen Photo-Detektor 9 angeschlossen. Die Szintillatoren 15 und die Lichtleiter 8 sind zur einfacheren Handhabung in einer rechteckigen Kunststofffolie 5 eingebettet, wobei die Kunststofffolie 5 auch beliebig anders geformt sein kann.

Die stäbchenförmigen Szintillatoren 15 sind bevorzugt etwa 1 cm bis 2 cm lang und haben einen im Vergleich zur Foliendicke geringeren Durchmesser im Zehntel-Millimeter-Bereich.

Im gezeigten Ausführungsbeispiel sind die Szintillatoren 15 aus Abschnitten einer szintillierenden optischen Kunststoff-Faser hergestellt, die einfach mit den Kunststoff-Lichtleitern 8 verbunden werden können. Es ist aber auch möglich, andere Szintillatoren, beispielsweise anorganische Kristalle, in dieser Anordnung zu verwenden.

Weiterhin ist es bei dieser Anordnung möglich, die Anzahl der Szintillatoren zu variieren, so dass in der Kunststofffolie zwischen einem und acht Szintillatoren angeordnet werden können, wobei die Anordnung frei wählbar ist. Abweichend von der dargestellten linearen Anordnung sind auch sternförmige oder beliebig andere Anordnungen denkbar.

Die Erfindung ist dabei nicht auf die gezeigten und beschriebenen Ausführungsbeispiele beschränkt. Vielmehr sind auch andere Anordnungen des erfindungsgemäßen Strahlungsmessgeräts möglich. Darüber hinaus ist die Erfindung auch zur Dosis-Bestimmung bei anderen, lokal begrenzten radiologischen Untersuchungen, wie etwa Kieferuntersuchungen, geeignet.

## Patentansprüche

1. Strahlungsmessgerät zur Bestimmung der Intensität und/oder der Dosis der ionisierenden Strahlung während einer radiologischen Untersuchung an einem Patienten, wobei das Strahlungsmessgerät (1; 14) in dem Strahlengang zwischen Strahlungsquelle und Patient angeordnet ist, **dadurch gekennzeichnet, dass** das Strahlungsmessgerät (1) wenigstens einen Szintillator (7; 15) aufweist.

2. Strahlungsmessgerät nach Anspruch 1, **dadurch gekennzeichnet, dass** am Szintillator (7; 15) wenigstens ein optischer Lichtleiter (8) zur Aufnahme der vom Szintillator (7; 15) ausgehenden Fluoresenz-Lichtsignale vorgesehen ist und dass der Szintillator mit wenigstens einem Detektor (9) zur Auswertung der Fluoreszenz-Lichtsignale des Szintillators (7; 15) verbunden ist.

3. Strahlungsmessgerät nach Anspruch 1 oder 2, **dadurch gekennzeichnet, dass** der wenigstens eine Szintillator als szintillierender Lichtleiter ausgebildet ist.

4. Strahlungsmessgerät nach einem der Ansprüche 1 bis 3, **dadurch gekennzeichnet, dass** das Strahlungsmessgerät mehrere szintillierende Lichtleiter hat.

5. Strahlungsmessgerät nach einem der Ansprüche 1 bis 4, **dadurch gekennzeichnet, dass** beide Enden des optischen Lichtleiters(8) jeweils mit einem Detektor (9) verbunden sind.

6. Strahlungsmessgerät nach einem der vorstehenden Ansprüche, **dadurch gekennzeichnet, dass** der Szintillator (7) etwa kreis- oder halbkreisförmig oder rechteckig ausgeführt ist.

7. Strahlungsmessgerät nach einem der Ansprüche 1 bis 6, **dadurch gekennzeichnet, dass** der Szintillator (7; 15) aus einem Kunststoff, vorzugsweise aus Polystyrol, hergestellt ist.

8. Strahlungsmessgerät nach einem der Ansprüche 1 bis 7, **dadurch gekennzeichnet, dass** ein Anzeigegerät (12) vorgesehen ist, an dem die Strahlungsintensität und/oder die Dosis der Strahlungsquelle während der radiologischen Untersuchung in Echtzeit angezeigt wird.

9. Strahlungsmessgerät nach einem der Ansprüche 1 bis 8, **dadurch gekennzeichnet, dass** das zu untersuchende Gewebe (2) durch eine Kompressionsplatte (3) gehalten wird.

10. Strahlungsmessgerät nach Anspruch 9, **dadurch gekennzeichnet, dass** der Szintillator (7; 15) oberhalb oder unterhalb der Kompressionsplatte (3) angeordnet ist.

11. Strahlungsmessgerät nach einem der Ansprüche 1 bis 10, **dadurch gekennzeichnet, dass** der Szintillator (7; 15) in ein Kunststoffelement (5) integriert ist.

12. Strahlungsmessgerät nach Anspruch 11, **dadurch gekennzeichnet, dass** das Kunststoffelement die Kompressionsplatte (3) ist.

13. Strahlungsmessgerät nach einem der Ansprüche 1 bis 12, **dadurch gekennzeichnet, dass** die Strahlungsquelle eine Röntgenquelle mit Beschleunigungsspannung zwischen etwa 18 kV und 35 kV ist.
